# EUROPÄISCHE PATENTSCHRIFT

(11) **EP 1 716 020 B1**
(45) Veröffentlichungstag und Bekanntmachung des Hinweises auf die Patenterteilung: **24.12.2008**
(21) Anmeldenummer: 05707521.0
(22) Anmeldetag: 18.02.2005
(51) Int. Cl.: B60R 21/13

(54) **FAHRZEUGKAROSSERIE**
VEHICLE BODY
CARROSSERIE DE VEHICULE

(30) Priorität: 18.02.2004 DE 102004007781
(43) Veröffentlichungstag der Anmeldung: 02.11.2006
(73) Patentinhaber: Bayerische MotorenWerke Aktiengesellschaft, 80809 München (DE)
(72) Erfinder: HEISS, Harald, 80637 Muenchen (DE); NEIS, Gerhard, 81825 Muenchen (DE)
(74) Vertreter: Schernhammer, Herbert
(86) Internationale Anmeldenummer: PCT/EP2005/001731
(87) Internationale Veröffentlichungsnummer: WO 2005/080142

(56) Entgegenhaltungen:
- EP-A- 0 676 316
- WO-A-02/076792
- DE-A1-2102004 016 36
- DE-U1- 8 523 831
- FR-A- 2 859 431
- US-A- 5 881 458
- PATENT ABSTRACTS OF JAPAN Bd. 2000, Nr. 09, 13. Oktober 2000 (2000-10-13) -& JP 2000 177641 A (FUJI HEAVY IND LTD), 27. Juni 2000 (2000-06-27)

## Beschreibung

Die Erfindung betrifft eine Fahrzeugkarosserie, insbesondere eine Karosserie eines oben offenen Personenkraftwagens nach dem Oberbegriff des Anspruchs 1, die aus der US-A-5 881 458 bekannt ist.

Aus der DE 199 10 007 C1 ist eine Karosserie eines oben offenen Fahrzeuges bekannt, mit einem über die Fahrzeugbreite reichenden Querträger, der Durchstecköffnungen für ortsfeste U-förmige Überrollbügel aufweist. Der Querträger stützt sich an beiden Fahrzeugseiten über pfeilerartige Konsolen ab, die an der Bodenquerstruktur angeordnet sind. Zusätzlich sind an der Bodenquerstruktur Flanschbuchsen vorgesehen, die die freien Endabschnitte der Überrollbügel aufnehmen.

Des Weiteren ist aus der DE 201 03 001 U1 eine Karosserie für ein oben offenes Fahrzeug bekannt, bei dem sich die verlagerbaren Überrollbügel in einer Bügelführung abstützen, die von einem Querträger in Verbindung mit einem profilierten Trennwandblech gebildet wird.

Außerdem ist in der nicht vorveröffentlichten Patentanmeldung 103 16 347.6 eine Karosserie für ein oben offenes Fahrzeug beschrieben, bei der höhenverlagerbare Überrollbügel in einem Querträger in Durchstecköffnungen geführt sind. Im Bereich der fahrzeugaußenseitigen Endabschnitte des rechteckförmigen Querträgers ist dessen Unterseite derart entfernt, dass die drei verbleibenden Wände des Querträgers einen "Schuh" bilden, der karosserieseitige Stützen formschlüssig übergreift.

Aufgabe der Erfindung ist es, eine Fahrzeugkarosserie mit verbesserter Durchlademöglichkeit zwischen dem Fahrgastraum und dem Gepäckraum und/oder vereinfachter Montage des Querträgers in der Fahrzeugkarosserie bereitzustellen.

Diese Aufgabe wird durch die Merkmale des Anspruchs 1 gelöst. Anspruch 15 beschreibt eine Vormontageeinheit für eine erfindungsgemäße Fahrzeugkarosserie.

Kerngedanke nach Anspruch 1 ist es, einen in Brüstungshöhe oder etwas unterhalb der Brüstungshöhe verlaufenden Querträger mittels Streben mit der Karosserieseitenstruktur zu verbinden, wobei die Streben etwa in einer Fahrzeugquerebene schräg nach unten außen verlaufen. Durch die schräg verlaufenden Streben verbleibt unterhalb des Querträgers ein gegenüber den bekannten Fahrzeugkarosserien vergleichsweise großer Freiraum, der als Durchladeöffnung zwischen dem Fahrgastraum und dem Gepäckraum genutzt werden kann, wobei die lichte Weite auch für sperrige Transportgüter, wie beispielsweise Snowboards oder Golfbags, ausreichend groß ist. Hieraus ergeben sich Vorteile gegenüber bekannten Anordnungen, die lediglich eine rechteckförmige Öffnung mit vergleichsweise geringem Querschnitt aufweisen. Die diagonal verlaufenden Streben verbessern die Karosseriesteifigkeit in beträchtlichem Maße, bei gleichzeitig erreichtem Gewichtsvorteil. Zudem zeichnet sich die erfindungsgemäße Karosserie durch geringe Herstellkosten und geringes Gewicht aus, da anstelle einer separaten Trennwand, wie sie beispielsweise aus der DE 201 03 001 U1 bekannt ist, lediglich lokale Streben eingesetzt werden. Im Bereich des Querträgers und/oder der Streben können zudem Fahrzeugaggregate, wie beispielsweise Steuergeräte, angeordnet werden.

In einer bevorzugten Ausführungsform der Erfindung verlaufen die Streben unter einem Winkel von etwa 45° in bezug auf den Querträger. Dabei liegen die Streben im wesentlichen in einer Fahrzeugquerebene, die lotrecht verläuft oder nur mit geringem Winkel (+/- 10 °) vom Lot abweicht. Bei dieser Anordnung liegen die freien Endabschnitte der Streben in einem Bereich etwa lotrecht unterhalb der Befestigung des Querträgers mit der Karosserieseitenstruktur.

Daneben ist es auch denkbar, dass die Streben einen größeren Winkel gegenüber dem Lot einschließen, da hierdurch eine verbesserte Abstützung des Querträgers und damit eine Erhöhung der Karosseriesteifigkeit erreicht wird. Der nur begrenzt zur Verfügung stehende Bauraum in Kraftfahrzeugen lässt in der Regel jedoch deutlich schräg stehende Streben nicht zu.

Eine besonders hohe Karosseriesteifigkeit ohne Beeinträchtigung der lichten Weite der Durchladeöffnung ergibt sich, wenn die Streben jeweils paarweise vor und hinter dem Querträger vorgesehen sind.

Eine weitere Vergrößerung des für eine Durchlademöglichkeit zur Verfügung stehenden Querschnitts ergibt sich, wenn die Anbindungsstelle zumindest einer der Streben am Querträger gegenüber der Fahrzeuglängsmittenebene seitlich in Richtung der Fahrzeugaußenseite versetzt ist. Hierdurch entsteht im Bereich der Fahrzeuglängsmittenebene ein zusätzlicher Freiraum.

Bei einer vorteilhaften Ausführungsform der Erfindung sind die Streben der rechten und der linken Fahrzeugseite aus einem Stück hergestellt sind, so dass sich ein V-förmiges Strebenbauteil ergibt. Setzen die oberen Endabschnitte der Streben außerhalb der Fahrzeugmitte an, weist das einstückige Strebenbauteil einen in Einbaulage parallel zum Querträger verlaufenden Schenkel auf, der die beiden schräg verlaufenden Streben miteinander verbindet. Das Strebenbauteil kann beispielsweise von einem Hohlprofil mit rechteckförmigem Querschnitt gebildet werden, bei dem die beiden schrägen Strebenabschnitte durch Biegen eines ursprünglich geradlinig verlaufenden Halbzeuges gewonnen werden.

Eine besonders einfache Montage ergibt sich, wenn der Querträger und/oder die Streben mit der Karosserie durch Schrauben verbunden sind. Auch für die Verbindung zwischen Querträger und Streben bietet sich eine Verschraubung an.

Vorzugsweise sind für die Anbindung des Querträgers an die Fahrzeugkarosserie Aufnahmen an der rechten und der linken Seite der Karosserie vorgesehen, die jeweils von der Karosserieseitenstruktur nach innen abstehen. Somit ergibt sich gegenüber dem bekannten Stand der Technik, bei dem säulenartige Aufnahmen vorgesehen sind, ein Gewinn an Bauraum unterhalb des Querträgers. Dieser Bauraum kann beispielsweise für den Einbau von Fahrzeugaggregaten genutzt werden.

Eine besonders einfache Montage des Querträgers in das Fahrzeug ergibt sich dann, wenn die Aufnahmen so ausgebildet sind, dass die Enden des Querträgers formschlüssig auf die Aufnahmen aufgeschoben oder in die Aufnahmen eingeschoben werden können, wobei das Einsetzbewegung des Querträgers bevorzugt in vertikaler Richtung erfolgt. Alternativ können die Aufnahmen ebene Anschraubflansche zur Verschraubung mit dem Querträger aufweisen.

Die Aufnahmen sind bevorzugt als tiefgezogene und/oder gekantete Blechschalenbauteile ausgebildet und bestehen aus demselben Material wie die Karosserieseitenstruktur, um eine möglichst einfache und kostengünstige Verbindung mit der Karosserieseitenstruktur zu ermöglichen.

Die Aufnahmen können auch als Gussbauteil ausgeführt sein, zum Beispiel aus einem Leichtmetallwerkstoff, wie beispielsweise einer Aluminiumlegierung.

Wie bereits aus dem Stand der Technik bekannt, ist der Querträger bevorzugt so ausgebildet, dass er in Durchgangsöffnungen einen feststehenden oder einen höhenverlagerbaren Überrollbügel aufnimmt. Hierdurch ergibt sich ein weiterer Gewinn an Bauraum und Gewicht.

Bei einem Querträger mit beispielsweise rechteckförmigen Querschnitt ergibt sich ein innenliegender geschlossener Hohlraum, der in besonders vorteilhafter Weise als Luftführungskanal genutzt werden kann. Dieser Luftführungskanal kann bei einem geschlossenen Fahrzeug oder bei einem Cabriolet mit geschlossenem Verdeck dazu genutzt werden, den Innenraum zu belüften oder zu entlüften.

Vorteile hinsichtlich der Fertigungskosten und der Montagezeit ergeben sich gemäß Anspruch 15 dann, wenn der Querträger außerhalb der Fahrzeugkarosserie zu einer Vormontageeinheit zusammengesetzt werden kann. Die Vormontageeinheit kann als komplette Baueinheit an das Fertigungsband des Fahrzeugherstellers zugeliefert werden. Der Vormontageumfang umfasst die Streben und/oder einen Teil oder alle Komponenten der Überrollschutzvorrichtung und/oder Fahrzeugaggregate wie beispielsweise Steuergeräte, Lautsprecher, Kabelbäume etc.

Mögliche Ausführungsbeispiele der Erfindung sind in der Zeichnung dargestellt und werden nachfolgend näher erläutert. Es zeigt:
- Fig. 1: eine perspektivische Ansicht auf eine Fahrzeugkarosserie im Bereich eines Querträgers zwischen dem Fahrgastraum und dem Gepäckraum, entgegen der Fahrtrichtung betrachtet,
- Fig. 2: eine perspektivische Ansicht entsprechend Fig. 1, mit einer Vormontageeinheit, bestehend aus Querträger, Streben und Überrollschutzvorrichtung, vor dem Einsetzen in die Fahrzeugkarosserie, in Fahrtrichtung betrachtet,
- Fig. 3: eine vergrößerte perspektivische Darstellung der Anbindungsstelle zwischen Querträger und Karosserieseitenstruktur,
- Fig. 4: eine der Fig. 3 entsprechende Darstellung der Befestigung des freien Endabschnittes einer Strebe mit der Fahrzeugkarosserie und
- Fig. 5: eine perspektivische Schnittdarstellung durch den Querträger, im Bereich der Fahrzeuglängsmittenebene.

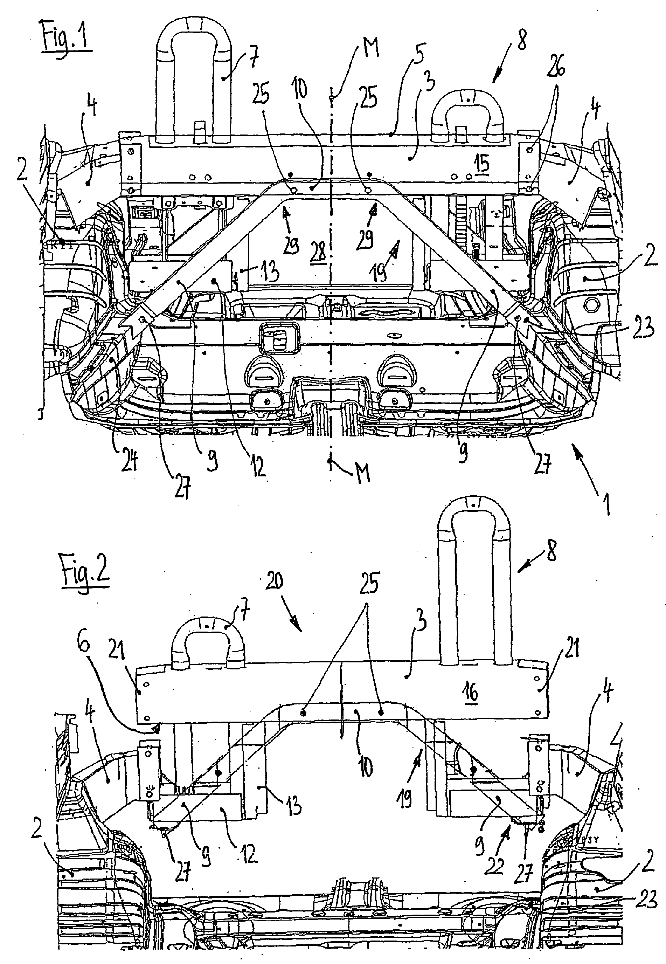

Fig. 1 zeigt eine in ihrer Gesamtheit mit 1 bezeichnete Karosserie eines oben offenen Fahrzeuges (Cabrios). Zwischen den beiden Karosserieseitenstrukturen 2 ist etwa in Brüstungshöhe ein horizontal in einer Fahrzeugquerebene verlaufender Querträger 3 zwischen einer rechten und einer linken karosseriefesten Aufnahme 4 vorgesehen. Der Querträger 3 hat einen etwa rechteckförmigen Querschnitt und weist Durchgangsöffnungen an der Oberseite 5 und der Unterseite 6 (siehe Fig. 2) des Hohlprofils auf, in die U-förmigen Überrollbügel 7 einer in ihrer Gesamtheit mit 8 bezeichneten Überrollschutzvorrichtung eingesetzt sind.

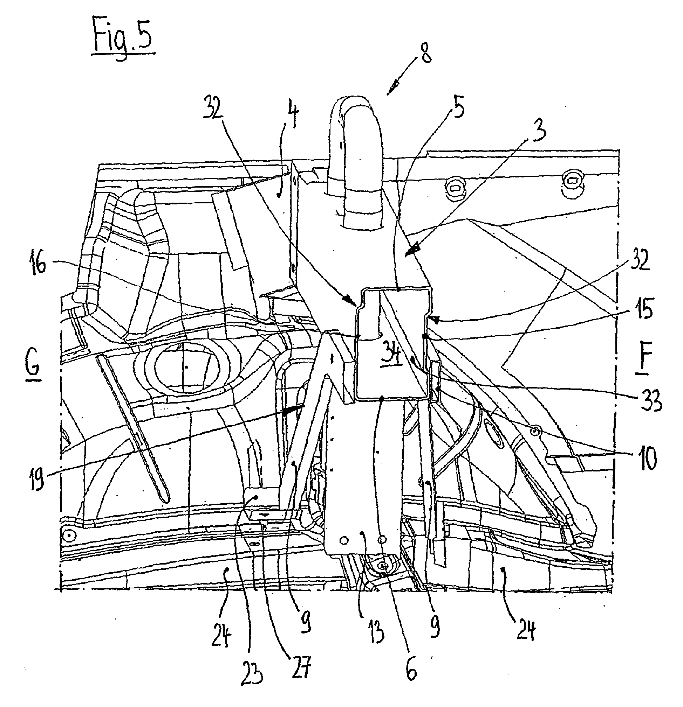

Sowohl an der Vorderseite 15 des Querträgers 3 als auch an seiner Rückseite 16 (siehe hierzu auch Fig. 2 und 5) sind jeweils rechte und linke Streben 9 vorgesehen, die jeweils unter einem Winkel von etwa 45° zum Querträger 3 verlaufen. Die Streben 9 stützen den Querträger zusätzlich an der Karosserie ab. Die oberen Endabschnitte der zu beiden Seiten des Querträgers 3 nach schräg unten außen verlaufenden Streben 9 sind über in Einbaulage etwa horizontal und parallel zum Querträger 3 verlaufende Schenkel 10 miteinander verbunden. Die Streben 9 und der Schenkel 10 werden jeweils von einem einstückigen Strebenbauteil 19 gebildet.

Durch den symmetrischen Aufbau mit Sfrebenbauteilen 19 sowohl an der Vorderseite 15 als auch an der Rückseite 16 des Querträgers 3 ergibt sich eine besonders steife Anbindung des Querträgers 3 an die Karosserie, bei gleichzeitig sehr geringen Bauraumbedarf.

Die der Verlagerung der Überrollbügel 7 in ihre Gebrauchsstellung dienenden Energiespeicher (in der Regel Schraubenfedern - nicht dargestellt) stützen sich an Konsolen 12 ab, die mit dem Querträger 3 über vertikal verlaufende Halterungen 13 verbunden sind.

Fig. 2 zeigt eine in ihrer Gesamtheit mit 20 bezeichnete Vormontageeinheit aus Querträger 3, Überrollschutzvorrichtung 8, Strebenbauteilen 19 und Konsolen 12 mit Halterung 13 vor ihrem Einbau in die Fahrzeugkarosserie 1. Weitere Aggregate, die ebenfalls an der Vormontageeinheit 20 angeordnet sein werden können, sind in Fig. 2 nicht dargestellt. Zum Einbau in das Fahrzeug wird die Vormontageeinheit 20 mit Hilfe eines Handhabungsgerätes in vertikaler Richtung von oben in die Fahrzeugkarosserie 1 eingesetzt. Hierbei werden die freien Endabschnitte 21 des Querträgers 3 in die von den Karosserieseitenstrukturen 2 nach innen abstehenden Aufnahmen 4 aufgesetzt. Abweichend von der zeichnerischen Darstellung ist es dabei möglich, an den freien Endabschnitten 21 des Querträgers 3 Formteile, zum Beispiel aus einem Leichtmetallguss, anzubringen, zur Erleichterung der Verschraubung des Querträgers 3 mit den Aufnahmen 4. Die Aufnahmen 4 sind als Blechschalenbauteile in Stahl ausgeführt, um eine möglichst einfache Verbindung mit den aus Stahlblech gefertigten Karosserieseitenstrukturen 2 zu ermöglichen.

Die freien Endabschnitte 22 der Streben 9 enden in Konsolen 23, die auf Längsträgern 24 der Karosserieseitenstruktur 2 aufgesetzt sind und zum Beispiel durch Punktverschweißung mit den Längsträgern 24 verbunden sind. Die Verbindung zwischen dem Querträger 3 und den Strebenbauteilen 19 erfolgt durch Schrauben 25.

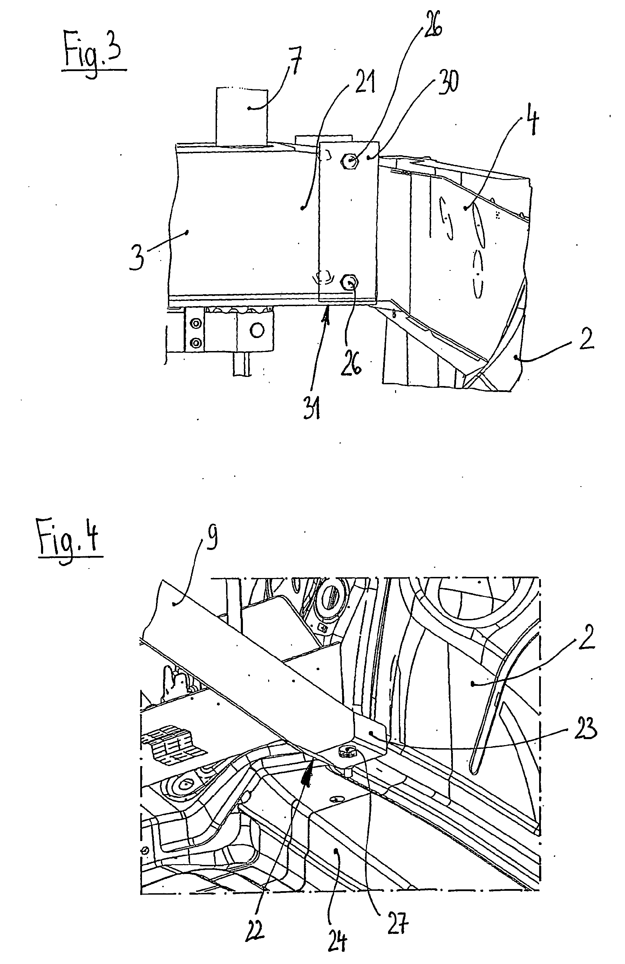

Wie die Fig. 3 und 4 veranschaulichen, wird der Querträger 3 nach dem formschlüssigen Einschieben seiner freien Endabschnitte 21 in die Aufnahmen 4 mit den Aufnahmen 4 verschraubt (Schrauben 26). Die Aufnahmen 4 sind hierzu als oben offene "Einstecktaschen" ausgebildet, mit Seitenwänden 30 und einem Boden 31. Die freien Endabschnitte 21 des Querträgers 3 werden in das Innere der "Einstecktaschen" eingeschoben, dort formschlüssig gehalten und mit den Schrauben 26 fixiert. Alternativ könnte der Querträger 3 auch auf die Aufnahmen 4 aufgeschoben werden. Um ein solches Aufschieben zu ermöglichen, muss im Bereich der Aufnahmen die Unterseite 6 des Querträgers 3 partiell entfernt sein. Nach dem Einsetzen der Vormontageeinheit 20 werden außerdem die freien Endabschnitte 22 der Streben 9 über die Konsolen 23 mit den Längsträgern 24 verschraubt (Schrauben 27).

Durch die Verschraubung (Schrauben 26 bzw. 27) ergeben sich einfache Reparaturmöglichkeiten. So kann beispielsweise bei einem Defekt der Überrollschutzvorrichtung 8 oder eines Anbauaggregates das Vormontagemodul 20 in einfacher Weise zur Vornahme der Reparatur ausgebaut werden.

Fig. 5 zeigt die Vormontageeinheit den Querträger 3 und die Streben 9 im Schnitt (Schnittebene = Fahrzeuglängsmittenebene M gemäß Fig. 1). Der Querträger 3 besteht aus einem in etwa rechteckförmigen Strangprofil aus Aluminium, mit Seitenlängen von ca. 140 mm x 90 mm und einer Wandstärke von ca. 3 mm. Das Strangprofil ist mit Prägungen 32 zur Erhöhung der Steifigkeit versehen und weist Einpressmuttern 33 zur Aufnahme der Schrauben 25 und 26 auf.

Der Hohlraum 34 im Inneren des Querträgers 3 kann zur Luftführung verwendet werden, insbesondere zur Entlüftung des Fahrgastraums F bei geschlossenem Verdeck des Cabrios, so dass auf separate Luftführungskanäle verzichtet werden kann, mit Vorteilen hinsichtlich Bauraum, Herstellkosten und Gewicht.

Die Strebenbauteile 19 werden jeweils von Vierkantrohren aus Stahl gebildet, mit Kantenlängen von ca. 50 mm x 12 mm. Die Wandstärke des Vierkantrohres beträgt ca. 2 mm.

Wie insbesondere aus Fig. 1 hervorgeht, steht durch die erfindungsgemäße Bauweise eine große lichte Weite (Freiraum 28) unterhalb des Querträgers 3 zur Verfügung, die zum Durchladen zwischen dem Fahrgastraum F und dem Gepäckraum G (siehe Fig. 5) genutzt werden kann. Der Freiraum 28 wird seitlich durch die Konsolen 13 begrenzt. In den Bereichen 29 nahe des Querträgers 3 bewirken die schräg verlaufenden Streben 9 eine nur geringfügige Einschränkung des für die Durchladung zur Verfügung stehenden Freiraums 28.

## Patentansprüche

1. Fahrzeugkarosserie, insbesondere Karosserie eines oben offenen Personenkraftwagens, mit einem Querträger (3), der im Bereich zwischen dem Fahrgastraum und dem Gepäckraum die Karosserieseitenstrukturen (2) etwa in Brüstungshöhe miteinander verbindet,
**dadurch gekennzeichnet, dass** unterhalb des Querträgers eine Durchladeöffnung (28) zwischen dem Fahrgastraum und dem Gepäckraum sowie wenigstens eine linke und eine rechte Strebe (9) vorgesehen sind, wobei jede Strebe (9) einerseits im Bereich ihres oberen Endabschnitts mit dem Querträger (3) oberhalb der Durchladeöffnung (28) verbunden ist, schräg nach unten in Richtung der Fahrzeugaußenseite verläuft und andererseits mit ihrem unteren Endabschnitt (22) mit der Karosserie (1) verbunden ist.

2. Karosserie nach Anspruch 1,
**dadurch gekennzeichnet, dass** die Streben (9) unter ca. 45° zum Querträger (3) verlaufen.

3. Karosserie nach Anspruch 1 oder 2,
**dadurch gekennzeichnet, dass** zumindest ein unterer Endabschnitt der Streben (9) in Einbaulage etwa lotrecht unterhalb der Anbindungspunkte des Querträgers (3) mit der Karosserie liegt.

4. Karosserie nach einem der vorgenannten Ansprüche,
**dadurch gekennzeichnet, dass** - in Fahrtrichtung betrachtet - rechte und linke Streben (9) jeweils vor und hinter dem Querträger (3) vorgesehen sind.

5. Karosserie nach einem der vorgenannten Ansprüche,
**dadurch gekennzeichnet, dass** die oberen Endabschnitte der Streben (9) seitlich außerhalb der Fahrzeugmittenebene (M) am Querträger (3) ansetzen.

6. Karosserie nach einem der vorgenannten Ansprüche,
**dadurch gekennzeichnet, dass** die rechte und die linke Strebe (9) einstückig in Form eines Strebenbauteils (19) hergestellt sind.

7. Karosserie nach Anspruch 6,
**dadurch gekennzeichnet, dass** das Strebenbauteil (19) einen in Einbaulage in der Karosserie (1) etwa horizontal verlaufenden Schenkel (10) aufweist, der die oberen Endabschnitte der Streben (9) miteinander verbindet.

8. Karosserie nach einem der vorgenannten Ansprüche,
**dadurch gekennzeichnet, dass** die Streben (9) einen geschlossenen rechteckförmigen Querschnitt aufweisen.

9. Karosserie nach einem der vorgenannten Ansprüche,
**dadurch gekennzeichnet, dass** die Streben (9) mit der Karosserie (1) und/oder dem Querträger (3) durch Schrauben (25, 27) verbunden sind.

10. Karosserie nach einem der vorgenannten Ansprüche,
**dadurch gekennzeichnet, dass** von den Karosserieseitenstrukturen (2) jeweils eine Aufnahme (4) für den Querträger (3) etwa horizontal nach innen absteht.

11. Karosserie nach Anspruch 10,
**dadurch gekennzeichnet, dass** die Aufnahmen (4) so geformt sind, dass der Querträger (3) formschlüssig in die Aufnahmen (4) einschiebbar oder auf die Aufnahmen (4) aufschiebbar ist.

12. Karosserie nach Anspruch 10,
**dadurch gekennzeichnet, dass** die Aufnahmen flanschartige Anschraubflächen aufweisen.

13. Karosserie nach einem der Ansprüche 10 bis 12,
**dadurch gekennzeichnet, dass** die Aufnahmen (4) von Blechschalen gebildet werden.

14. Karosserie nach einem der vorgenannten Ansprüche,
**dadurch gekennzeichnet, dass** der Querträger (3) ein geschlossenes Hohlprofil ist, dessen Hohlraum (34) als Luftführungskanal zur Be- und Entlüftung des Fahrgastraums (F) dient.

15. Vormontageeinheit einer Fahrzeugkarosserie nach einem der vorgenannten Ansprüche, die außerhalb der Fahrzeugkarosserie für den nachfolgenden Einbau in die Karosserie zusammengesetzt wird,
**dadurch gekennzeichnet, dass** am Querträger (3) die Streben (9) und/oder eine Überrollschutzvorrichtung (8) und/oder Fahrzeugaggregate vormontiert sind.

## Claims

1. A vehicle body, especially a body of a passenger car open at the top, comprising a cross-member (3) which, in the region between the passenger space and the luggage space, connects the body side-structures (2) approximately at parapet level,
**characterised in that** underneath the cross-member a loading opening (28) between the passenger space and the luggage space is provided together with at least one left and one right strut (9), wherein each strut (9), in the region of its top end portion, is connected to the cross-member (3) above the loading opening (28) and extends at angle downwards towards the outside of the vehicle, and its bottom end portion (22) is connected to the body (1).

2. A body according to claim 1,
**characterised in that** the struts (9) extend at approximately 45° to the cross-member (3).

3. A body according to claim 1 or claim 2,
**characterised in that** at least one bottom end portion of the struts (9), when in the installed position, lies approximately vertically under the place where the cross-member (3) is connected to the body.

4. A body according to any of the preceding claims,
**characterised in that** the right and left struts (9), considered in the direction of travel, are provided respectively in front of and behind the cross-member (3).

5. A body according to any of the preceding claims,
**characterised in that** the top end portions of the struts (9) abut the cross-member (3) laterally and outside the centre plane (M) of the vehicle.

6. A body according to any of the preceding claims,
**characterised in that** the right and the left strut (9) are made in one piece in the form of a strut component (19).

7. A body according to claim 8,
**characterised in that** the strut component (19) has a limb (10) which extends approximately horizontally when installed in the body (1) and joins the top end portions of the struts (9) to one another.

8. A body according to any of the preceding claims,
**characterised in that** the struts (9) have a closed rectangular cross-section.

9. A body according to any of the preceding claims,
**characterised in that** the struts (9) are connected to the body (1) and/or to the cross-member (3) by screws (25, 27).

10. A body according to any of the preceding claims,
**characterised in that** a holder (4) for the cross-members (3) extends approximately horizontally inwards from the body side-structures (2).

11. A body according to claim 10,
**characterised in that** the holders (4) are shaped so that the cross-member (3) is positively insertable into the holders (4) or can be slid over the holders (4).

12. A body according to claim 10,
**characterised in that** the holders have flange-like surfaces for screwing.

13. A body according to any of claims 10 to 12,
**characterised in that** the holders (4) are in the form of sheet-metal shells.

14. A body according to any of the preceding claims,
**characterised in that** the cross-member (3) is a closed hollow profile having a cavity (34) which serves as an air guide duct for aerating and venting the passenger space (F).

15. A preassembly unit forming part of a vehicle body according to any of the preceding claims and put together outside the body for subsequent incorporation in the body,
**characterised in that** the struts (9), a roll-over protective structure (8) and/or vehicle sub-units are pre-assembled on the cross-member (3).

## Revendications

1. Carrosserie de véhicule notamment carrosserie d'un véhicule de tourisme dont le dessus est ouvert, comportant une traverse (3) reliant les structures latérales de carrosserie (2) sensiblement à hauteur d'appui d'ouverture dans la zone entre l'habitacle et le coffre à bagages,
**caractérisé en ce qu'**
en dessous de la traverse, il y a un passage (28) entre l'habitacle et le coffre à bagages et au moins une entretoise gauche et une entretoise droite (9),
chaque entretoise (9) étant reliée à la traverse (3) d'un côté au niveau de son segment d'extrémité supérieure au dessus du passage (28) pour descendre en biais en direction des côtés extérieurs du véhicule, et de l'autre côté, par son segment d'extrémité inférieure (22) à la carrosserie (1).

2. Carrosserie selon la revendication 1,
**caractérisée en ce que**
les entretoises (9) font un angle sensiblement de l'ordre de 45° par rapport à la traverse (3).

3. Carrosserie selon la revendication 1 ou 2,
**caractérisée par**
au moins un segment d'extrémité inférieure des entretoises (9) qui se situe en position de montage sensiblement horizontalement en-dessous des points de fixation de la traverse (3) à la carrosserie.

4. Carrosserie selon l'une des revendications précédentes,
**caractérisée en ce que**
vues dans la direction de déplacement, les entretoises (9) à droite et à gauche sont prévues respectivement devant et derrière la traverse (3).

5. Carrosserie selon l'une des revendications précédentes,
**caractérisée en ce que**
les segments d'extrémité supérieure des entretoises (9) sont appliqués latéralement à la traverse (3) au-delà du plan médian (M) du véhicule.

6. Carrosserie selon l'une des revendications précédentes,
**caractérisée en ce que**
l'entretoise droite et l'entretoise gauche (9) sont réalisées en une seule pièce sous la forme d'une pièce formant entretoise (19).

7. Carrosserie selon la revendication 6,
**caractérisée en ce que**
la pièce formant entretoise (19) comporte une branche (10) sensiblement horizontale en position de montage dans la carrosserie (1), cette branche reliant l'un à l'autre, les segments d'extrémité supérieure des entretoises (9).

8. Carrosserie selon l'une des revendications précédentes,
**caractérisée en ce que**
les entretoises (9) ont une section rectangulaire fermée.

9. Carrosserie selon l'une des revendications précédentes,
**caractérisée en ce que**
les entretoises (9) sont reliées à la carrosserie (1) et/ou à la traverse (3) par des vis (25, 27).

10. Carrosserie selon l'une des revendications précédentes,
**caractérisée en ce qu'**
un logement (4) respectif pour la traverse (3) est en saillie vers l'intérieur sensiblement dans la direction horizontale à partir des structures latérales (2) de la carrosserie.

11. Carrosserie selon la revendication 10,
**caractérisée en ce que**
les logements (4) sont formés pour que la traverse (3) puisse s'y engager par une liaison de forme ou être emmanchée sur les logements (4).

12. Carrosserie selon la revendication 10,
**caractérisée en ce que**
les logements ont des surfaces de vissage en forme de bride.

13. Carrosserie selon l'une des revendications 10 à 12,
**caractérisée en ce que**
les logements (4) sont formés par des coquilles en tôle.

14. Carrosserie selon l'une des revendications précédentes,
**caractérisée en ce que**
la traverse (3) est un profil creux fermé dont la cavité (34) sert de canal de ventilation pour l'alimentation et l'évacuation de l'air de l'habitacle (F).

15. Unité pré-assemblée pour une carrosserie de véhicule selon l'une des revendications précédentes, assemblée à l'extérieur de la carrosserie du véhicule pour être ensuite installée dans la carrosserie,
**caractérisé en ce que**
la traverse (3) comporte les entretoises (9) d'un arceau de protection (8) et/ou d'équipements pré-assemblés du véhicule.
